## Europäisches Patentamt
## European Patent Office
## Office européen des brevets

(11) Publication number: **0 178 052**
**B1**

# EUROPEAN PATENT SPECIFICATION

(45) Date of publication of patent specification: **10.05.89**

(51) Int. Cl.⁴: **F 16 K 5/04**

(21) Application number: **85305857.6**

(22) Date of filing: **16.08.85**

---

(54) Valve core assembly for a shut-off/equalizing valve.

---

(30) Priority: **20.08.84 US 642285**

(43) Date of publication of application:
**16.04.86 Bulletin 86/16**

(45) Publication of the grant of the patent:
**10.05.89 Bulletin 89/19**

(84) Designated Contracting States:
**DE FR GB IT**

(56) References cited:
**DE-A-3 042 756**
**FR-A-1 290 315**
**US-A-2 643 089**
**US-A-3 232 579**

(73) Proprietor: **THE BABCOCK & WILCOX COMPANY**
**1010 Common Street P.O. Box 60035**
**New Orleans Louisiana 70160 (US)**

(72) Inventor: **Weber, Lee A.**
**6435 Curtiss Ct.**
**Mentor Ohio 44060 (US)**
Inventor: **Machesky, Frank**
**440 W.Main Street**
**Spencer Ohio 44275 (US)**

(74) Representative: **Purvis, William Michael Cameron**
**D. Young & Co. 10 Staple Inn**
**London WC1V 7RD (GB)**

Courier Press, Leamington Spa, England.

## Description

The invention relates to a valve core assembly for a shut-off/equalizing valve.

Shut-off/equalizing valves are used in positioner systems for positioning large devices such as air registers of the kind used in boilers to change the amount of combustion air. In an "automatic" position the shut-off/equalizing valve allows air to flow unrestricted to the positioner. In the event that the device which the positioner is controlling must be operated manually, the shut-off/equalizing valve can be placed in a "manual" position. In this position the supply air to the positioner is shut off and the positioner's two outputs are connected together. This unloads the device controlled by the positioner so that it can be manually adjusted.

Prior art constructions of shut-off/equalizing valves have included multiple parts, requiring bonding the pieces of a two-piece valve core together, installation of replaceable O-rings, and custom assembly in the form of shimming to ensure the correct compression of the O-rings. Surface finish in O-ring seal cavities and on other moving parts has required secondary machining operations in order to avoid premature wear. Also, O-rings are subject to rolling and twisting within their cavities, which also can produce premature wear.

Patent specification FR—A—1 290 315 discloses a valve member having a crossbore therein and a projection by which it can be rotated, the valve body having a coating of elastic material which includes ribs in the form of circles or rings locatable about inlet and outlet passages of a valve body to effect sealing.

Patent specification US—A—3 232 579 discloses an angle cock wherein a cylindrical cock key has a wrap around gasket thereon, the gasket having two through bores and two arrays of raised rectangular beads which can seal off passageways in a casing in which the angle cock is rotatably mounted.

According to the invention there is provided a valve core assembly to be rotatably received within a valve body of a shut-off/equalizing valve and comprising a generally cylindrical metallic core member having a cross bore formed therethrough, an elastomeric seal element on the core member, the seal element including a layer of elastomeric material covering the circumference of a portion of the core member, and four longitudinal ribs upstanding from the layer, the longitudinal ribs comprising two pairs of the longitudinal ribs with each of the pairs of ribs being in straddling relation to a respective one of the openings of the cross bore, and the core member including a shaft element at one end, an actuating stem portion at the other end and, located between the shaft element and the actuating stem portion, an enlarged barrel portion through which the cross bore is formed, characterised in that the seal element is moulded onto the barrel portion and includes first and second circumferential ribs adjacent respective ends of the barrel portion with the four longitudinal ribs extending between the circumferential ribs.

The core member can be formed of turned aluminum and have elastomer moulded thereonto. In a preferred embodiment an elastomer sold under the trademark "Viton" is used because of its resistance to abrasion and the chemicals to which the valve is likely to be subjected.

In a valve incorporating a core assembly according to the invention all sealing can be radial; therefore a single secondary machining operation can control the compression of the sealing surfaces by controlling the valve body bore dimension.

The aluminum core can be a simple machined part having a stem portion and a enlarged barrel portion having a cross bore formed therethrough.

The invention is diagrammatically illustrated by way of example with reference to the accompanying drawings, in which:-

Figure 1 is a side elevation view of a shut-off/equalizing valve including a valve core assembly according to the invention;

Figure 1A is a plan view corresponding to Figure 1;

Figure 2 is a side elevation view of a valve core of a valve core assembly according to the invention prior to having an elastomeric seal element moulded thereonto;

Figure 3 is an end elevation view of the valve core of Figure 2;

Figure 4 is a side elevation view of the valve core of Figure 2 after the elastomeric seal has been moulded thereonto;

Figure 5 is a sectional view taken along line 5—5 of Figure; and

Figure 6 is an enlarged sectional view showing the circled area of Figure 5.

Referring to the drawings, a shut-off/equalizing valve 10 comprises a valve body 12, an inlet connection 14, an outlet connection 16, and a valve core assembly 18.

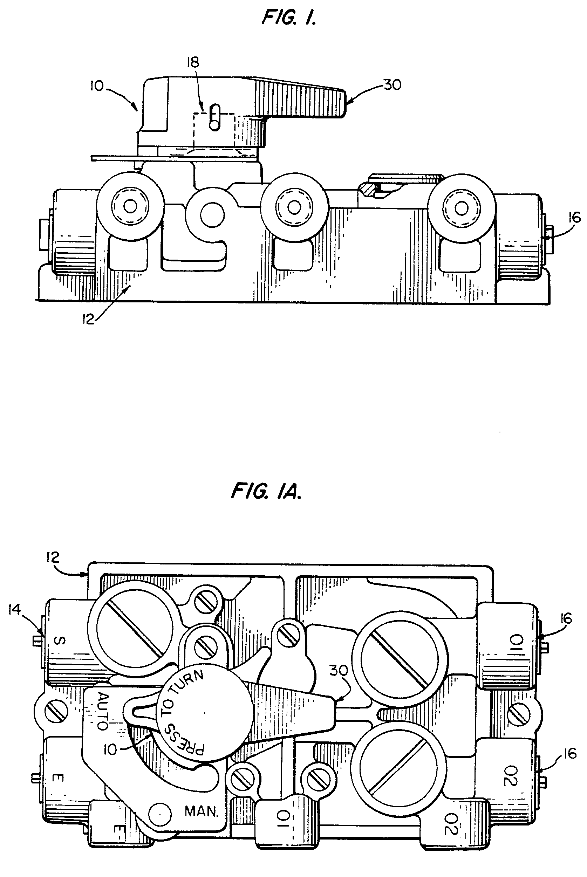

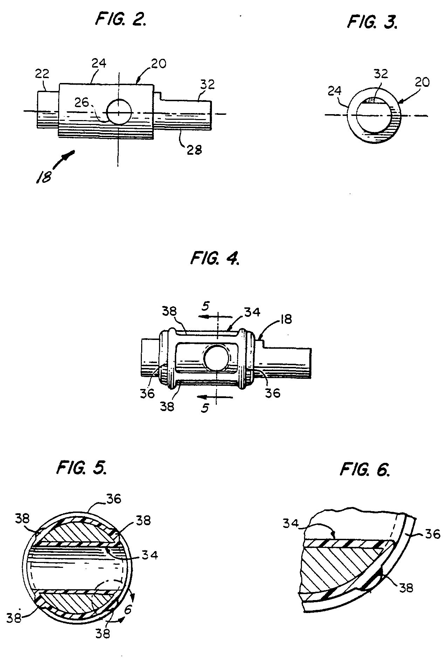

Referring to Figures 2 and 3, the core assembly 18 comprises a metallic core member 20, shown after machining but before application of a seal element. The core member 20 includes a shaft element 22 which is received in a bore (not shown) in the valve body, and serves to position the core member within the body; an enlarged barrel portion 24 having a cross bore 26 formed therethrough, and a stem portion 28 which extends upwardly through the body 12 for the attachment of an actuating handle 30 (See Figure 1). The stem portion 28 has a flat 32 formed thereon for proper positioning of the handle 30.

Referring to Figures 4, 5 and 6, an elastomeric seal element 34 is moulded onto the barrel portion 24, with the elastomer covering the entire circumference of the barrel portion as well as the interior of the cross bore 26. The seal element 34 is formed with first and second circumferential ribs 36 each adjacent a respective end of the barrel portion 24, and four longitudinal ribs 38. As shown in Figure 4 and 5, the longitudinal ribs 38 straddle the cross bore 26 so that in combination with the circumferential ribs 36, the cross bore is surrounded by compressible sealing ribs, ensuring that there will be no leakage around the valve core when the cross bore is aligned with the inlet and outlet connections, and will completely seal off all flow through the valve when the cross bore is rotated 90° with respect to the inlet and outlet connections.

## Claim

A valve core assembly (18) to be rotatably received within a valve body (12) of a shut-off/ equalizing valve and comprising a generally cylindrical metallic core member (20) having a cross bore (26) formed therethrough, an elastomeric seal element (34) on the core member (20), the seal element (34) including a layer of elastomeric material covering the circumference of a portion (24) of the core member (20), and four longitudinal of ribs (36, 38) upstanding from the layer, the longitudinal ribs (38) comprising two pairs of the longitudinal ribs (38) with each of the pairs ribs (38) being in straddling relation to a respective one of the openings of the cross bore (26), and the core member (20) including a shaft element (22) at one end, an actuating stem portion (28) at the other end and, located between the shaft element (22) and the actuating stem portion (28), an enlarged barrel portion (24) through which the cross bore (26) is formed, characterised in that the seal element (34) is moulded onto the barrel portion (24) and includes first and second circumferential ribs (36) adjacent respective ends of the barrel portion (24) with the four longitudinal ribs (38) extending between the circumferential ribs (36).

## Patentanspruch

Aufbau eines Ventileinsatzes (18), welcher drehbar in einem Ventilkörper (12) eines Absperr-/ Ausgleichventiles aufnehmbar ist und ein im allgemeinen zylindrisches, metallisches Einsatzteil (20) aufweist, welches eine durch dieses hindurch ausgebildete Querbohrung (26) hat, ein elastomeres Dichtungselement (34) auf dem Einsatzteil (20) aufweist, wobei das Dichtungselement (34) eine Schicht von elastomerem Material aufweist, welches den Umfang eines Abschnittes (34) des Einsatzteiles (20) abdeckt und Rippen (36, 38) aufweist, die sich von dieser Schicht erheben und von denen vier Längsrippen sind, wobei die Längsrippen (38) zwei Paare von Längsrippen (38) aufweisen, und je ein Paar der Rippen (38) die jeweils entsprechende der Öffnungen der Querbohrung (26) einschließt, und das Einsatzteil (20) an einem Ende ein Schaftelement (22) aufweist, am anderen Ende einen Betätigungsstengelabschnitt (28) aufweist und, zwischen dem Schaftelement (22) und dem Betätigungsstengelabschnitt (28), einen vergrößerten Walzenabschnitt (24), durch welchen die Querbohrung (26) ausgebildet ist, dadurch gekennzeichnet, daß das Dichtungselement (34) an den Walzenabschnitt (24) angeformt ist und erste und zweite umlaufende Rippen (36) aufweist, welche unmittelbar an den jeweiligen Enden des Walzenabschnittes (24) liegen, wobei die vier Längsrippen (38) sich zwischen den umlaufenden Rippen (36) erstrecken.

## Revendication

Ensemble de boisseau de robinet (18) destiné à être reçu à rotation à l'intérieur d'un corps de robinet (12) d'un robinet d'arrêt/compensation et comportant un boisseau métallique généralement cylindrique (20) possédant un alésage transversal (26) pratiqué au travers, un élément d'étanchéité en élastomère (34) sur le boisseau (20), l'élément d'étanchéité (34) comprenant une couche de matériau élast mère recouvrant la circonférence d'une partie (24) du boisseau (20), et quatre nervures longitudinales (36, 38) se dressant depuis ladite couche, les nervures longitudinales (38) comportant deux paires de nervures longitudinales (38) avec chacune des paires de nervures (38) encadrant une des ouvertures respectives de l'alésage transversal (26), et le boisseau (20) comprenant un arbre (22) à une extrémité, une tige de manœuvre (28) à l'autre extrémité et, située entre l'arbre (22) et la tige de manœuvre (28), une partie en tonneau élargie (24) à travers laquelle est pratiqué l'alésage transversal (26), caractérisé en ce que l'élément d'étanchéité (34) est moulé sur la partie en tonneau (24) et comprend des première et seconde nervures circonférentielles (36) adjacentes aux extrémités respectives de la partie en tonneau (24), les quatre nervures longitudinales (38) s'étendant entre les nervures circonférentielles (36).

## FIG. I.

## FIG. IA.

EP 0 178 052 B1

FIG. 2.

FIG. 3.

FIG. 4.

FIG. 5.

FIG. 6.